# EUROPEAN PATENT APPLICATION

(11) **EP 3 739 410 A1**
(43) Date of publication of application: **18.11.2020**
(21) Application number: 19174136.2
(22) Date of filing: 13.05.2019
(51) Int. Cl.: G05B 23/02

(54) **METHOD FOR CONTROLLING A METAL ROLLING PROCESS FOR PRODUCING INTERMEDIATE CASTINGS, A RELATED COMPUTER SYSTEM, AND A METHOD FOR PRODUCING INTERMEDIATE CASTINGS**

(71) Applicant: ABB Schweiz AG, 5400 Baden (CH)
(72) Inventor: Janka, Dennis, 5400 Baden (CH); Cohen, Andrew, 5400 Baden (CH); Lenders, Felix, 5400 Baden (CH); Li, Nuo, 68167 Mannheim (DE); Bauer, Reinhard, 69126 Heidelberg (DE); Chioua, Moncef, 69115 Heidelberg (DE); Hollender, Martin, 69221 Dossenheim (DE)
(74) Representative: Zimmermann & Partner Patentanwälte mbB

(57) **Abstract**

At least one embodiment of a method for monitoring and/or controlling a metal rolling process is disclosed, which comprises a step of obtaining time series data representing characteristic manufacturing data of the rolling process, a step of predetermining at least one signature pattern class that represents a predetermined type of a manufacturing event, a step of generating a plurality of discrete snapshots from the time series data by a snapshot module, wherein each snapshot has at least an individual reference time relative to the time series data, and wherein the plurality of the snapshots contain the same number of features. Further, at least a plurality of snapshots is provided to a classifier module for classifying each snapshot. Subsequently, each snapshot of the plurality of snapshots is classified such, that at least one classification tag information is added to the analysed snapshot. The classification tag information is a data value representing the fact, if a specific signature pattern that belongs to the predetermined signature pattern class is present in an analysed snapshot. Furthermore, the method includes the steps of providing classified snapshots to an analyser module and analyzing classified snapshots by the analyser module. The analysing step of a plurality of the snapshots is configured such, that a start time and/or end time of the signature pattern within the time series data is determined.

## Description

### FIELD

Embodiments of the present disclosure generally relate to a method for controlling a manufacturing process, and more specifically to a method for controlling a metal rolling process for producing intermediate castings using a mill, a computer system comprising a processor and a memory, and to a method for producing intermediate castings.

### BACKGROUND

Intermediate castings, such as ingots, blooms, billets, slabs and/or strips are generally produced in plants having a plurality of metal mills for cold or hot rolling said semi-finished casting products. In particular, these casting products may be formed by a plurality of intermitting forming processes, wherein, for example, a slab is subjected several times to metal mills and/or to a plurality of mills for reducing the thickness of the slab in order to produce a strip.

In the context of metal rolling processes the term "slab" is understood as a lengthy piece of metal that has a rectangular cross-section. The slab can be initially created directly by continuous casting or indirectly by rolling an ingot on a slabbing mill. Further processing of slabs can be done for example by flat rolling, skelping, and pipe rolling. By this the slab can be formed into a strip, a semi-final raw product, for example sheet metal, plates, strip metal, pipes, and tubes.

During the manufacturing process various measurements and/or monitoring of characteristic manufacturing data is performed in order to ensure process integrity and product quality. However, it is rather time consuming and cost ineffective to deeply analyse this data for maintaining a high quality of the manufacturing process and the product. In fact, a tremendous amount of human experience is required for identifying product and/or process related issues within the vast quantity of data.

### SUMMARY

Embodiments of the present disclosure provide a computer implemented method for monitoring and/or controlling a metal rolling process, in particular to analyse processes related time series data. Furthermore, a method for training a classifier module used in the context of the aforementioned analysis process, a computer system storing a program for performing aforementioned method, and a method for producing intermediate castings and/or an intermediate product piece using aforementioned control method is disclosed.

The term "intermediate product piece" refers to a piece of a product at any stage or position of the manufacturing process. When particularly referring to a metal rolling process, the intermediate product piece for example may include the initial piece directly after being formed by casting even before the first milling step; further it may refer to the slab, thus, the piece in being formed into rectangular shape before forming it into the strip by a plurality of rolling steps. Additionally, the final (raw) product, for example a metal sheet being wound up as a coil for heat treatment and/or transport is also comprised in the term "intermediate product piece".

The method comprising the step of obtaining time series data representing characteristic manufacturing data of the rolling process. Such time series data may contain - but not limited to - an incoming thickness of an intermediate product piece, for example of a metal slab or metal strip, at a rolling mill.

Possibly, the incoming thickness is measured in an area of a leading edge of the intermediate product piece. Further, time series data may include an outgoing thickness of the intermediate product piece when leaving a rolling mill.

Additionally or alternatively, time series data may include incoming or outgoing thickness deviation relative to a set point, a force measured at tensioners of the rolling mill, a linear speed of the outgoing intermediate product piece, a feedforward effort, a feedback effort, an accumulated length of the intermediate product piece at a first pair of rolls or a first rolling mill, an accumulated length of the intermediate product piece at a second pair of rolls or a second rolling mill, a time, a number of (current) passes of an intermediate product piece through a rolling mill, an input thickness set point, an output thickness set point and/or a direction of travel of the intermediate product piece.

The method comprises further the step of defining or predetermining at least one signature pattern class that represents a predetermined type of a manufacturing event. The step of definition may take place during manufacturing and/or initially when installing and/or calibrating manufacturing and control components of the metal rolling manufacturing plant. The signature pattern class may represent different specific signature patterns each being caused by a specific and unique manufacturing event of the same general type.

In particular, but not limited to, such type of manufacturing could be a positive-negative-swing or an underswing of an incoming or outgoing thickness deviation of the intermediate product piece. Such underswing in thickness may be caused by a detuned control loop of an automatic thickness control installation of a rolling mill or by thickness disturbance of an incoming intermediate product piece.

However, each actual under swing event taking place during manufacturing may result in a specific and unique signature pattern in the time series data. Each of these specific and unique signature patterns belong to the defined general signature pattern class "underswing". In other words, the definition of a signature pattern class may be understood as categorisation of the same type of events, which - due to its nature - always takes place differently but according to a similar scheme.

Generally, it is to be mentioned that the general disclosure of the present patent application is not limited to specific manufacturing events explicitly named herein. Also other non-described manufacturing events and related signature pattern classes are also optionally included. The use of the exemplary embodiment of the class of the signature pattern "under swing" aims on providing a specific explanation for the one skilled in the art, but shall not limit the scope.

However, all those hereby included but not explicitly named manufacturing events take place in the context of a metal rolling process for producing an intermediate product piece, in fact, to a hot or cold metal rolling process. Examples for additionally included - but not limited to - manufacturing events:

A feedforward-feedback gain mismatch in a rolling mill, which is considered in the case that the feed-forward control is not reducing the thickness adequately or is overcompensating.

Changing hardness of the material of an intermediate product piece.

Bias: Bias detection is used to track whether the actual value of a signal deviates systematically from its reference value.

Exit thickness deviation higher than entry: a condition where the exit thickness deviation is higher than the entry thickness deviation in the final pass of a coil.

The method further comprises the step of generating a plurality of discrete snapshots from the time series data by a snapshot module, wherein each snapshot has at least an individual reference time relative to the time series data, and wherein the plurality of the snapshots contain the same number of features. Hence, the snapshot module creates a plurality of pieces of the time series data for further analysis, wherein each snapshot, before being further processed by a classifier, has the same size and/or the same number of features.

However, it is possible that snapshots have different timely length, wherein an optional step of down sampling or an equivalent step can be applied to snapshots of different length for bringing each snapshot to the same data and/or feature size.

According to an embodiment snapshots are generated by a so-called rolling window, which constantly determines start times of snapshots to be created while moving in the timeline of the time series data. Consequently, the size of the window determines a respective end time of each start time.

According to an embodiment a time difference between two start times of two subsequent snapshots is preferably less than the overall length of the rolling window such, that the snapshots overlap each other.

Accordingly, the reference time may be, for example, the start time of each snapshot.

The term "feature" reflects a measurable property of the snapshot, for example a certain data value at a certain point of time, a start time and/or end time of the snapshot relative to the time series data, a total time length of the snapshot, and/or further information.

According to an embodiment of the method, at least a plurality of snapshots created by the snapshot module is provided to a classifier module for classifying each snapshot. Subsequently, each snapshot of the plurality of snapshots is classified such, that at least one classification tag information is added to the analysed snapshot. The classification tag information is a data value representing the fact, if a specific signature pattern that belongs to the predetermined signature pattern class is present in an analysed snapshot.

According to an embodiment, the classifier module comprises and/or uses at least one machine learning algorithm, in particular incorporating a random forest, a support vector machine, Extra Trees and/or an artificial neural network, in particular a deep neural network, for classifying a snapshot.

According to a specific embodiment the classifier module comprises a deep neural network, which has at least three hidden layers, in particular at least four hidden layers, preferably having the size of 200, 100, 100, 100.

The classifier tag information may be a discrete value, for example "0" or "1", which represents if the particular signature pattern that belongs to the predetermined signature pattern class is (=1) or is not (=0) within the classified snapshot.

However, - optionally or alternatively - the classifier tag information may stand for a probability that the particular signature pattern is present in the classified snapshot; in this case the classifier tag information may have any value, e.g. 50% or 0.5.

Furthermore, the method includes the step of providing classified snapshots to an analyser module and analyzing classified snapshots by the analyser module. The analysing step of a plurality of the snapshots is configured such, that a start time and/or end time of the signature pattern within the time series data is determined.

By executing this method in the context of a production process for intermediate product pieces, in particular of cold or hot metal rolling processes, for the first time it is achieved to automatically identify manufacturing issues caused by particular manufacturing events.

In particular, the term "method for controlling a metal rolling process" may be understood as "method for monitoring a metal rolling process".

However, a possible method step exemplary represented by the wording "controlling for manipulating and/or adjusting something" may relate to at least one active measure by which a certain process, product and/or product characteristic is/are indeed altered.

Additionally, the method may be configured such, that the identification process may constantly improve by applying self-learning algorithms. Thus, once the classifier is fed with at least one signature pattern class and is trained with labelled snapshots having a specific signature pattern belonging to the provided signature pattern class, the method identifies starting and end times of unknown specific embodiments of predetermined manufacturing events. This enables an operator of the production process to increase product and process quality, in particular by being enabled to automatically identify a manufacturing event in means of time and location. As a consequence, an operator is further enabled to apply specific tailored countermeasures in order to prevent manufacturing events to negatively influence product and process.

In particular, this goal is achieved by combining at least the classification tag information of each classified snapshot of a plurality of classified snapshots and deducting the start time and/or end time of specific signature pattern within the time series data.

For example, analysing a plurality of at least partially overlapping snapshots provides a certain redundancy of the classification tag information when referenced to a specific point in time or specific points in time of the time series data. The analyser module is able to deduct from this redundancy - with a certain probability - the information of start time and end time of a signature pattern within the time series data.

In particular, in this context the step of combining may be defined as a step of deducting a common information from a plurality of classification tag information.

According to an embodiment, the analysing step includes referencing the result of the combining step to at least one reference time, it particular to a plurality of reference times. Alternatively described, the analyser module is aware of a start time and/or end time and/or length of each snapshot including a respective classification tag information. The method is configured such, that the information of start time, end time and classification tag information of a plurality of analysed snapshots is put together such, that all this information about each snapshot of the time series data results in an overall information of start times and end times of signature patterns within the time series data.

According to a specific embodiment, the classification tag information can be a discrete value, for example "1" or "0". In this case, all classified snapshots are ordered by a start time. Then, a corresponding 0/1-sequence can be constructed according to each snapshot's classification tag information. For any continuous sequence of 1's the end-time of the first snapshot indicates the end of the signature pattern and the start-time of the last snapshot indicates the start time of the signature pattern.

Additionally or alternatively, a percentage of 0s and 1s can be determined for every point in time. Local maxima of this function indicate the position of the specific signature pattern.

According to an embodiment of the method the analysing step comprises a correction step. This correction includes the provision of a defined correction window, wherein each classification tag information within the correction window is subject to a possible data value correction if a correction condition is present.

For example, the classification of a snapshot can be incorrect such, that a snapshot comprises the classification tag information that a specific signature pattern of the predetermined signature pattern class is supposed to be present in said snapshot, wherein it is not. In this case the classification of said snapshot results in a *false positive.* Respectively, a snapshot can be classified as a *false negative,* too.

Generally, the correction step includes to analyse and define a majority of negative and/or positive classification tag information of a plurality and/or each of the classified snapshots within the defined correction window. Subsequently the correction step is executed according to the identified majority in the correction window.

According to the embodiment having discrete 1- or 0-values, in the course of the correction step it is analysed if there is a majority of Is or 0s, specifically aligned in a row, in the correction window. The correction itself is executed such, that a minority - for example one single 0 (Zero) in a row of Is (Ones) - is swapped (corrected) into a value of the majority - in the example the single 0 is changes into a 1.

Additionally or alternatively, the correction step may include to define a rolling average, e.g. an average value of the single values of the classified snapshots of the correction window. According to the average value of the correction window all classification tag information of each snapshot is corrected according to the average value.

Thus, as described aforementioned the correction condition can be embodied in various manners, for example by analysing the structure and/or a value of a plurality of classification tag information of classified snapshots, in particular of (at least partially sequentially) snapshots being in a timely order.

According to an additional or in alternative embodiment, the correction step comprises the building of a membership function of the data values of each classification tag information including the respective reference time.

According to an embodiment the analyser module can be equipped with self-learning algorithms such, that classifier can be trained to identify a start time and/or end time of a specific signature pattern with labelled 0/1-series of classified snapshots.

According to an embodiment the size and/or the length of a snapshot is/are chosen with respect to an approximate length of a specific signature pattern to be identified and/or to the predetermined signature pattern class. In particular, the method of creating snapshots may include to create different sets of snapshots having different length/size. Consequently, all different window sizes must be included in the training phase. This can be either done by training a different classifier for each window size or by adding the length of the window as a feature that is input into a single classifier for all window sizes.

According to a specific further development, the method comprises a step of applying a plurality of unclassified snapshots to a feature generation module, and generating and adding at least one additional feature to each of the plurality of unclassified snapshots by applying analyzing measures to the plurality of unclassified snapshots. Such analysing measures are configured for facilitating and/or improving the classification process of the classifier module. For example snapshots can be subjected to de-noising measures, filtering measures, in particular by a low pass filter and/or de-trend measures, in particular correlation analysis measures to remove trends from time series data.

According to a particular embodiment, a 4th order low pass Butterworth infinite impulse response filter with a cut off frequency of 0.1Hz is applied by the future generation module to at least a plurality of the snapshots. This filter can be applied twice - once forward and once reverse in order to remove a phase lag. This provides an effective filter order of 8.

An additional aspect of the present disclosure discloses a step of reconfirming the result of the analyser module to the classification module. This is done by providing the information of a determined signature pattern to a confirmation module, which is configured to provide the possibility to re-determine and confirm if the signature pattern is indeed present in the time series data between the determined start time and end time. If the presence in the time series data of specific signature pattern belonging to the predetermined signature pattern class can be confirmed, in particular by a confirmation institution, all or at least a part of respective snapshots are labelled with a confirmation label.

According to an embodiment, the confirmed and labelled snapshots may subsequently be provided to the classifier module. By this way, the classifier module obtains verified training data for improving the classification process. The confirmation institution may be an additional analysing module applying common comparison measures to the signature pattern being identified in the time series data and to the predetermined signature pattern class.

Additionally or alternatively, the confirmation institution may be represented by an experienced user, wherein the confirmation module comprises suitable display and feedback means in order to enable the experienced user to compare, in particular to visually inspect the identified signature pattern.

According to a further aspect, the time series data is provided to a detection module. This step can be executed in parallel to the snapshot step. The detection module enables a step of examining the time series data by applying at least one predetermined detection algorithm to the time series data for identifying a specific signature pattern including start time and end time thereof.

The result of this examination may be provided to the classifier module and/or to the analyser module such, that respective snapshots can be labelled accordingly and used for training purposes of the classifier module and/or for comparing the result of classifying of a snapshot with the result of the examining step.

According to an additional aspect a method for training the classifier module is disclosed. In a step of the training method, time series data representing characteristic manufacturing data of the process is obtained. The time series data includes specific data about the presence of a specific signature pattern representing a specific manufacturing event in the time series data. Hence, it is known that the time series data contains the specific signature pattern at a specific time within the time series data.

In particular, in a further step a signature pattern class is defined that relates to the specific signature pattern at the specific time, thus, the specific signature pattern belongs to the signature pattern class. The (hierarchic) constellation of the specific signature pattern and the respective signature pattern class as discussed *supra* is applicable for the training method, too.

According to an optional step of the training method, a plurality of snapshots are created from the time series data by a snapshot module, wherein each snapshot has at least an individual reference time relative to the time series data, and wherein the plurality of the snapshots contain the same number of features.

Due to the fact that the provided time series data comes with the information about time and embodiment of a specific signature pattern it can be deducted, in particular by a labelling module or by an analysing module, which of the created snapshots comprise, at least partially, the specific signature pattern. Accordingly, each snapshot comprising the specific signature pattern is labelled with a classification tag information reflecting the presence of the signature pattern within the snapshot.

The labelled snapshot is provided to the classifier module for training the classifier.

Thus, the method for training a classifier module comprising the step of providing time series data and labelled snapshots to the classifier module, wherein each labelled snapshot comprises a label information, wherein the label information is a data value representing if a signature pattern of a predetermined type of signature pattern is present in the labelled snapshot.

According to a further aspect of the disclosure a computer system is provided. The computer system comprises at least a processor and a memory coupled to the processor, wherein the memory stores a program that, when executed by the processor, causes the program to perform a method in accordance with at least one of the embodiments described *supra.*

According to a specific aspect, the system is configured to represent at least the input module configured for obtaining time series data, the snapshot module for generating a plurality of discrete snapshots, the classifier module for classifying at least one snapshot, and the analyser module for analysing classified snapshots.

Also a computer-readable medium is disclosed storing a program that, when executed by a processor, causes the processor to perform a method in accordance with at least one of the embodiments of the method described *supra.*

According to yet another aspect of the disclosure a method for producing intermediate castings is disclosed comprising the steps: providing an intermediate product piece made from metal to at least one rolling mill; controlling the rolling mill such, that a thickness of the intermediate product piece is reduced during the rolling process, wherein a target thickness of the intermediate product piece is provided; measuring a thickness of the product piece and thereby obtaining time series data reflecting the thickness of the product piece; applying a method for controlling the metal rolling process according to any of the preceding described embodiments of a method such, that a start time and/or end time of a signature pattern within the time series data is determined. Subsequently, the rolling mill and/or an additional rolling mill can be controlled and/or regulated according to the start time and/or end time of the signature pattern, in particular for manipulating and/or compensate process or product characteristics.

Hence, a thickness manipulation control and adjustment device for manipulating and/or adjusting an outgoing thickness of the intermediate product piece either of the present rolling mill and/or of the additional rolling mill are provided with the information about the signature pattern. With this, the specific control of the mill acts such, that the characteristic manufacturing event causing the identified specific signature pattern is compensated.

For example, in case there is a thickness deviation detected by identifying the respective specific signature pattern in the time series data, the thickness control and adjustment device is operated for reducing and/or eliminating the thickness deviation of the intermediate product piece.

Further features of the present disclosure will be made apparent through the following descriptions of example embodiments with reference to Figures.

It should be appreciated that Summary of the Invention is not intended to identify key or important features of embodiments of the present disclosure, without suggesting any limitations as to the scope of the present disclosure. Other features of the present disclosure will be made apparent through the following depictions.

### BRIEF DESCRIPTION OF THE DRAWINGS

Through the following detailed description with reference to the accompanying drawings, the above and other objectives, features and advantages of example embodiments disclosed herein will become more comprehensible. In the drawings, a plurality of embodiments of the present disclosure will be illustrated in an exemplary and non-limiting manner, wherein:
FIG. 1 illustrates a flowchart depicting a general overview of an embodiment of the disclosed method;
FIG. 2 illustrates one specific signature pattern of the signature pattern class "under swing";
FIG. 3 illustrates another specific signature pattern of the signature pattern class "under swing";
FIG. 4 illustrates another specific signature pattern of the signature pattern class "under swing";
FIG. 5 illustrates another specific signature pattern of the signature pattern class "under swing";
FIG. 6 illustrates a further specific signature pattern including a plurality of classified snapshots;
FIG. 7 illustrates the specific signature pattern according to FIG. 2 including a plurality of positive snapshots results classified by the analyser module;
FIG. 8 illustrates the confirmation module displaying the specific signature pattern according to FIG. 2;
FIG. 9 illustrates one embodiment of the disclosed control method;
FIG. 10 illustrates an embodiment of a training method.

### DETAILED DESCRIPTION

Principles of the present disclosure will now be described with reference to various example embodiments illustrated in the drawings. It should be appreciated that the depiction of these embodiments is only to enable those skilled in the art to better understand and further implement the present invention, without suggesting any limitations as to the scope of the present invention in any manner. It is noted that wherever practicable similar or like reference numbers may be used in the Figures, and may indicates similar or like functionality. One skilled in the art will readily recognize from the following description that alternative embodiments of the structures and methods illustrated herein may be employed without departing from the principles of the present disclosure described therein.

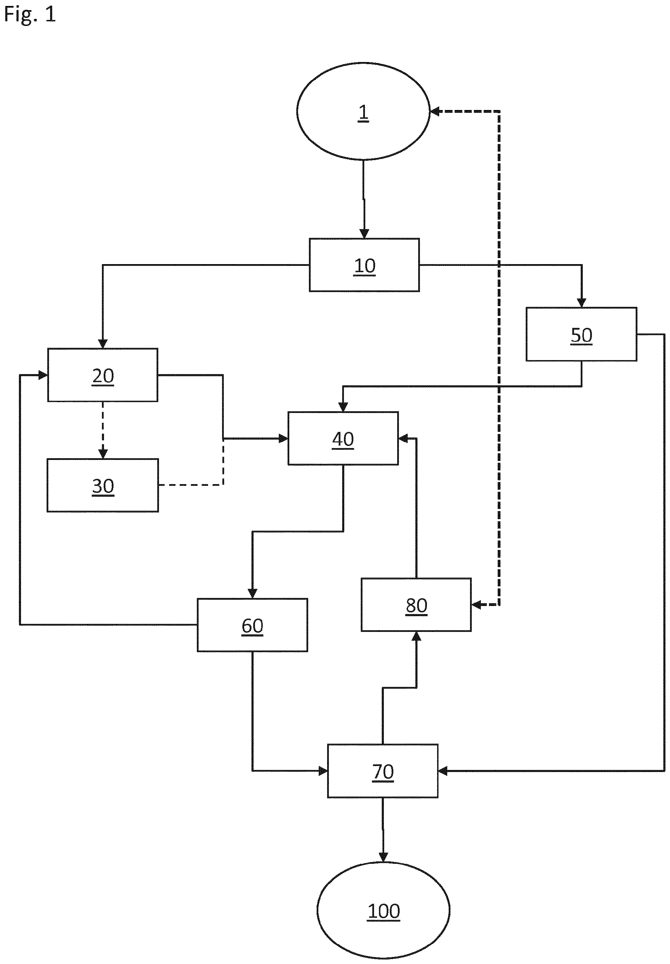

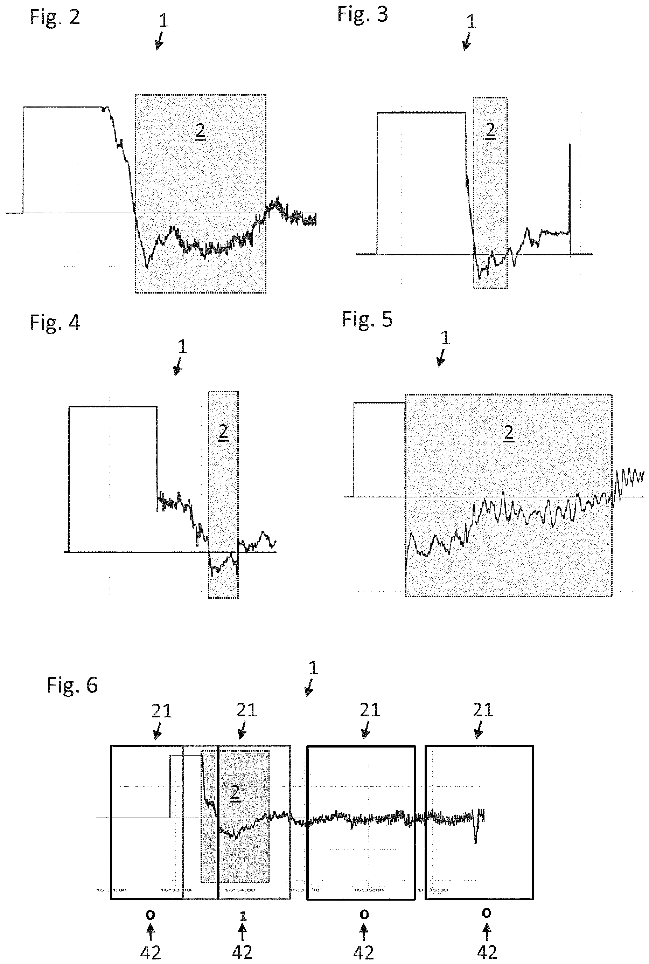

FIG. 1 is an exemplary flowchart of one embodiment of the disclosed method. In a first step time series data 1 is provided to an input module 10, wherein the input module 10 may be a suitable data interface of a computer system. The time series data 1 includes a specific signature pattern 2 as shown in FIG. 2, 3, 4, 5, 6 or 7. The signature pattern 2 is caused by an under swing of a measured thickness deviation of an intermediate production piece, for example a measured thickness deviation of a slab or a strip manufactured during a hot or cold rolling process. An underswing in the exit thickness deviation signal occurs if exit thickness deviation falls from a high positive value below zero and raises again above zero. FIG. 3, 4, 5 and 6 display four other examples of an under swing event. It becomes apparent that these examples have similar visual appearance. Nevertheless, their shapes and waveforms vary, making it hard to detect all these examples simultaneously using pure rule-based/signal processing methods. Generally, all these under swing events result in different signature patterns 2 as highlighted in the figures, but still belonging to the same general type of event, thus to the same signature pattern class "under swing".

As a consequence, the signature pattern class "under swing" is defined, wherein all different specific under swing events belong to the same signature pattern class "under swing". The definition can be done automatically with help of a self-learning module and/or, it can be provided by experienced users, or it can be provided by a predefined datasets comprising a library of predefined signature pattern classes. Thus, it is not required to execute the step of defining the under swing pattern class directly and timely close to the execution of further method steps.

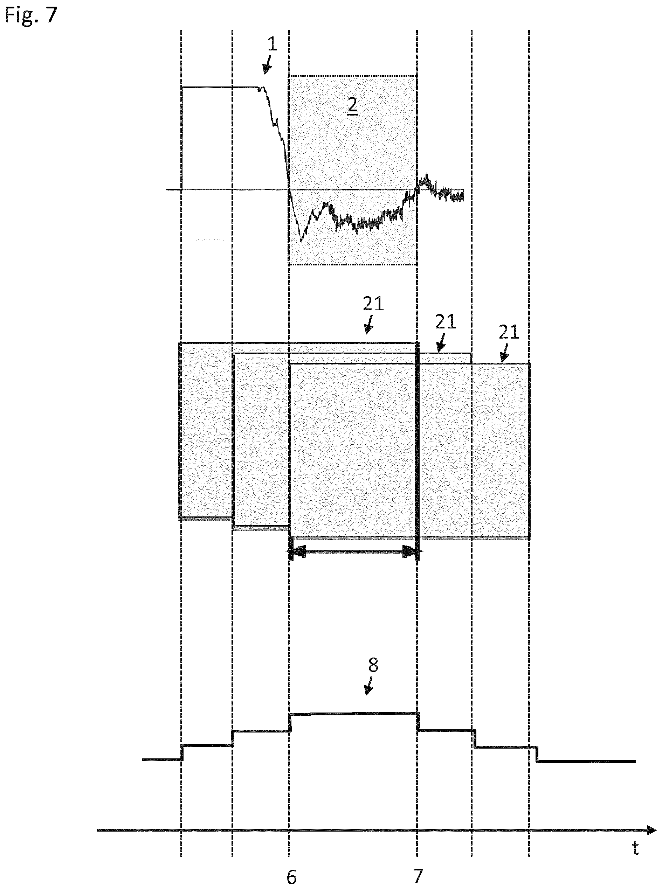

With the help of FIG. 6 and 7 a step of creating snapshots 21 with the snapshot module 20 is explained. With a so-called rolling window a plurality of snapshots 21 are created from the time series data 1. Each snapshot 21 has a start time and end time. Thus, each snapshot 21 reflects a certain piece of the time series data 1, wherein the information of said piece is reflected by features of the snapshot 21.

With the help of an optional feature generation module 30 (FIG. 1, dashed connection arrows) each snapshot 21 can be enriched with further supportive features, for example by applying a filter on the data of the snapshot 21. However, snapshots 21 are either enriched by the generation module 30, or alternatively solely provided by the snapshot module 20 to a classifier module 40.

A core element of one embodiment of the method and a related system may be represented by the classifier module 40. The classifier module 40 must be trained for identifying specific signature patterns 2, 3, 4, 5 such that a belonging to the same signature pattern class within the snapshots 21 con be determined. After classification of a snapshot 21 the classifier module 40 adds a classification tag information 42 to the snapshot(s) 21, which thus become a classified snapshot 21 (FIG. 6).

Another core element of one embodiment of the method and a related system may be an analyser module 60, which recombines the information of a plurality of classified snapshots 21 such that a start time 6 and an end time 7 of the specific signature pattern 2 in the time series data 1 is identified. Said deduction of information of a plurality of classified snapshots 21 can be performed as described *supra.*

With the help of FIG. 6 and FIG. 7 at least one method therefore is presented. FIG. 6 shows a plurality of snapshots 21 of the time series data 1, wherein additional, non-shown, overlapping snapshots may be created, too. The classifier module 40 adds a classification tag information 42 to each snapshot 21, wherein snapshots 21 at least partially comprising the specific signature pattern 2 are provided with the classification tag information 42 having a value "1". Others snapshots without the specific signature pattern 21 are assigned with a value "0".

FIG. 7 sketches the content of method steps of the analyser module 60. The analysing step comprises combining at least one reference time, preferably start time and end time, and the classification tag information 42 of each classified signature pattern 21. This combination leads to an aggregation of a plurality of positive (1)-classification tag information 42, which graphically results in a plateau 8. By definition, the start time 6 and the end time 7 of the plateau represents the start time 6 and end time 7 of the specific signature pattern 2 within the time series data 1.

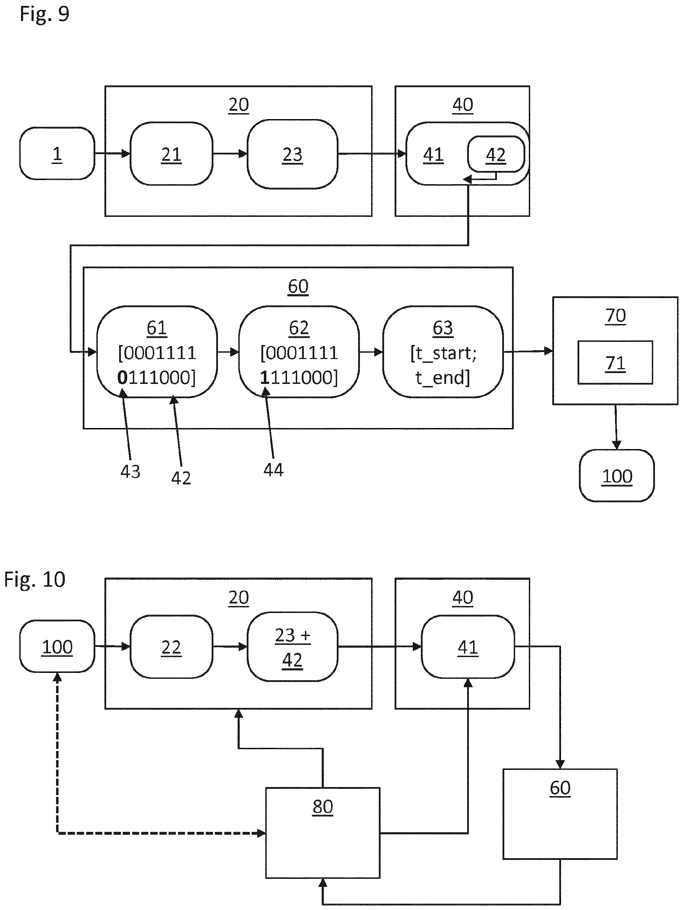

A specific embodiment is illustrated in FIG. 9. Time series data 1 is provided to the snapshot module 20, wherein snapshots 21 are created, wherein each snapshot has the same number of features 23. The classifier module 40 provides classification tag information 42 to each snapshot 21, wherein the plurality of classified snapshots 21 are analysed by the analyser module 60. Reference number 61 represents an analysed sequence of snapshots 21 with a plurality of classification tag information 42, in particular in the form of a row of 0 and 1.

However, according to the non-limiting example of FIG. 9, there is one *false negative* 43, thus one incorrect classification tag information 43 of one thus incorrectly classified snapshot 21, which wrongly indicates an absence of a signature pattern 2 within the respective snapshot.

The method according to FIG. 9 includes a correction step, wherein a majority of classification tag information 42, 43 in a certain correction window is analysed. In case, an irregularity - as shown in the present example according to FIG. 9 - is identified, said irregularity is corrected by replacing the incorrect classification tag information 43 with a replacing value 44. Hence, a corrected sequence of snapshots 62 is created with the help of the correction step of the analyser module 60. In particular, by this all 0 (zeros) in between the 1-sequences are changed to 1.

As shown in FIG. 1, a detection module 50 can be provided. The detection module 50 examines the time series data 1 by applying at least one predetermined detection algorithm to the time series data 1 for identifying a specific signature pattern 21 including start time 6 and end time 7 thereof.

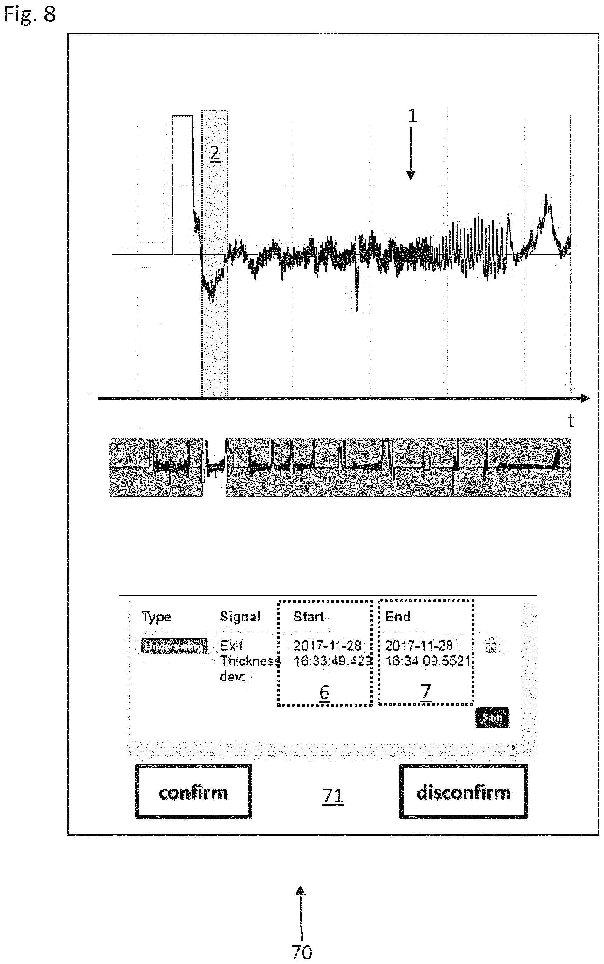

FIG. 8 provides an example for a confirmation module 70, wherein the results of the analysing step performed by the analyser module 60 is displayed with the help of a display device 71. For example, the time series data 1 is displayed including the start times 6 and the end time 7 of an identified specific signature pattern 2 belonging to the predetermined signature pattern class. In particular, but not limited to, an experienced user will be enabled to confirm or disconfirm the result of the analysis. A confirmation may lead to a labelling of the respective snapshots 21 as being classified as *correct positive.* Not limited to, the labelled snapshots 22 are provided via a training module 80 to the classifier module 40 for training the classifier 41. At an end of the method the time series data 1 is completely analysed such, that the analysed time series data 100 comprises a list of signature patterns 21 including start times 6 and end times 7.

FIG. 10 shows a training method for training an untrained classifier 41 of the classifier module 40. An analysed time series data 100 is provided to the snapshot module 20. Subsequently, a plurality of labelled snapshots 22 each having features 23 and a classification tag information 42 are created. These labelled snapshots 22 are fed to the classifier module 40. After being analysed by the analyser module 60 the overall result is compared with the initial time series data 100 (ground truth). By this, either the snapshot module, in particular the size of each snapshot 21, and the classifier 41 can be trained.

In the description and claims hereunder, unless otherwise additionally needed in the context, the terms "comprise" and "include" are understood as including the illustrated components or component groups, without excluding any other components or component groups.

Citations of any prior art in the description are not, and should not be considered as admitting to imply that these prior art constitute the common knowledge.

Although the following claims of the present application are formulated for a particular combination of features, it is to be understood that the scope of the present disclosure further covers any novel feature explicitly or implicitly disclosed herein or generalized therefrom, or any novel combination of features, regardless of involving the same solution claimed in any of the claims.

### REFERENCE NUMBERS

- 1: time series data
- 2: specific signature pattern
- 3: another specific signature pattern
- 4: another specific signature pattern
- 5: another specific signature pattern
- 6: start time of the specific signature pattern 2
- 7: end time of the specific signature pattern 2
- 10: input module
- 20: snapshot module
- 21: snapshot
- 22: labelled snapshot
- 23: feature
- 30: feature generation module
- 40: classifier module
- 41: classifier
- 42: classification tag information
- 43: incorrect classification tag information (false negative)
- 44: replacing value
- 50: detection module
- 60: analyser module
- 61: analysed sequence of snapshots
- 62: corrected sequence of snapshots
- 63: information about specific signature pattern
- 70: confirmation module
- 71: display device
- 80: training module
- 100: analysed time series data

## Claims

1. A computer implemented method for controlling a metal rolling process for producing an intermediate product piece, comprising the steps:
- obtaining time series data (1) representing characteristic manufacturing data of the process by an input module (10);
- defining at least one signature pattern class representing a predetermined type of a manufacturing event of the process;
- generating a plurality of discrete snapshots (21) from the time series data (1) by a snapshot module (20), wherein each snapshot (21) has at least an individual reference time relative to the time series data (1), and in particular wherein the plurality of the snapshots (21) contain the same number of features (23);
- classifying a plurality of the snapshots (21) by providing a snapshot (21) to a classifier module (40) having a classifier (41) and by adding at least one classification tag information (42) to the snapshot (21), wherein the classification tag information (42) is a data value representing a probability of a signature pattern (2) being at least partially present in an classified snapshot (21), wherein the signature pattern (2) belongs to the predetermined signature pattern class;
- providing classified snapshots (21) to an analyser module (60);
- analyzing classified snapshots (21) by using each respective reference time such, that a start time (6) and/or end time (7) of the signature pattern (2) within the time series data (1) is determined.

2. The method according to claim 1, wherein the analysing step includes combining the classification tag information (42) of each classified snapshot (21) of a plurality of the classified snapshots (21).

3. The method according to claim 2, wherein the analysing step includes referencing the result of the combining step to at least one reference time, it particular to a plurality of reference times.

4. The method according to one of the preceding claims, wherein the analysing step comprises a correction step which includes the definition of a correction window, wherein each classification tag information (42) within the correction window is subject to a possible data value correction if a correction condition is present.

5. The method according to one of the preceding claims, wherein the analysing step comprises building of a membership function of the data values of each classification tag information (42) including the respective reference time.

6. The method according to one of the preceding claims, wherein the classifier (41) use at least one machine learning algorithm, in particular incorporating a random forest, a support vector machine, Extra Trees and/or an artificial neural network, in particular a deep neural network.

7. The method according to claim 6, wherein the deep neural network has at least three hidden layers, in particular four hidden layers, preferably having the size of 200, 100, 100, 100.

8. The method according to one of the preceding claims, comprising the steps of applying a plurality of unclassified snapshots (21) to a feature generation module (30), and generating and adding at least one additional feature to each of the plurality of unclassified snapshots (21) by applying analyzing measures to the plurality of unclassified snapshots (21), in particular de-noising measures, filtering measures, in particular by a low pass filter, and/or de-trend measures, in particular correlation analysis measures to remove trends from time series data (1).

9. The method according to one of the preceding claims, comprising a step of reconfirming by providing the information of a determined signature pattern (2) to a confirmation module (70), which is configured to provide the possibility to re-determine the result of the analyser module (60), in particular if the signature pattern (2) is indeed present in the time series data (1) between the determined start time (6) and end time (7).

10. The method according to claim 9, wherein the result of the reconfirming is fed to the classifier module (40) for training the classifier module (40).

11. The method according to one of the preceding claims, comprising the steps:
- providing the time series data (1) to a detection module (50);
- examining the time series data (1) by applying at least one detection algorithm to the time series data (1) for identifying a signature pattern (2) including start time (6) and end time (7) thereof.

12. The method according to claim 11, comprising the step of providing the signature pattern (2) from the detection module (50) to the classifier module (40) for training the classifier module (40) and/or for comparing the result of classifying of a snapshot (21) with the result of the examining step.

13. Method for training a classifier module (40) for classifying a plurality of snapshots (21) created from time series data (1), comprising the steps:
- obtaining time series data (1) representing characteristic manufacturing data of a metal rolling process for producing an intermediate product piece by an input module, wherein the time series data (1) comprises one specific signature pattern (2) representing a specific manufacturing event of the process;
- defining at least one signature pattern (2) class representing a predetermined type of a manufacturing event, wherein the specific signature pattern (2) belongs to the signature pattern class;
- generating a plurality of discrete snapshots (21) from the time series data (1) by a snapshot module (20), wherein each snapshot (21) has at least an individual reference time relative to the time series data (1), and wherein the plurality of the snapshots (21) contain the same number of features;
- labelling each snapshot (22) with a classification tag information (42) deducted from the time series data (1), wherein the classification tag information (42) is a data value representing a probability of a signature pattern (2) being at least partially present in a respective snapshot (22);
- providing at least one labelled snapshot (22) to the classifier (41) for training purposes.

14. A computer system comprising a processor and a memory coupled to the processor,
wherein the memory stores a program that, when executed by the processor, causes the program to perform a method in accordance with any one of the preceding claims, wherein the system is configured to represent at least the input module (10) configured for obtaining time series data (1), the snapshot module (20) for generating a plurality of discrete snapshots (21), the classifier module (40) for classifying at least one snapshot (21), and the analyser module (60) for analysing classified snapshots (21).

15. A computer-readable medium storing a program that, when executed by a processor, causes the processor to perform a method in accordance with any one of claims 1 to 13.

16. A method for producing intermediate castings comprising the steps:
- providing an intermediate product piece made from metal to at least one rolling mill;
- controlling the rolling mill such, that a thickness of the intermediate product piece is reduced during the rolling process, wherein a target thickness of the intermediate product piece is provided;
- measuring a thickness of the product piece and thereby obtaining time series data (1) reflecting the thickness of the product piece;
- applying a method for controlling the metal rolling process according to any of the preceding claims 1 to 13 such, that a start time (6) and/or end time (7) of a signature pattern (2) within the time series data (1) is determined; and
- controlling the rolling mill and/or an additional rolling mill for manipulating and/or adjusting a thickness of the intermediate product piece according to the start time (6) and/or end time (7) of the signature pattern (2).
